# EUROPEAN PATENT APPLICATION

(11) **EP 2 623 577 A1**
(43) Date of publication of application: **07.08.2013**
(21) Application number: 11829210.1
(22) Date of filing: 28.09.2011
(51) Int. Cl.: C09J 201/00, C09J 5/06, C09J 11/04

(54) **ADHESIVE**

(30) Priority: 29.09.2010 JP 2010218019
(71) Applicant: Akebono Brake Industry Co., Ltd., Tokyo 103-8534 (JP)
(72) Inventor: HASHIMOTO Akinori, Tokyo 103-8534 (JP); KATO Masanori, Tokyo 103-8534 (JP)
(74) Representative: Grünecker, Kinkeldey, Stockmair & Schwanhäusser
(86) International application number: PCT/JP2011/072244
(87) International publication number: WO 2012/043657

(57) **Abstract**

The present invention addresses the problem of further improving bonding reliability of an object in which a metal plate and a porous material are attached together, in a history of harsh environments and high load conditions. The present invention is a powder adhesive which comprises at least thermosetting adhesive particles and an anti-rust filler and which is used for attaching a metal plate and a porous material, wherein the content of the anti-rust filler is 0.1 to 1.0 parts by mass with respect to 100 parts by mass of the thermosetting adhesive particles.

## Description

### Technical Field

The invention is related to an adhesive, and more particularly, to a powdery adhesive containing thermosetting adhesive particles.

### Background Art

Regarding a method for adhesion between a metal plate and a porous material, for example a pressure plate (metal plate) of a brake pad and a friction material (porous material), a method has been known in which thermosetting adhesive particles are attached to the pressure plate with an electrostatic application method, the thermosetting adhesive particles are pre-cured and then the friction material is strongly bonded thereto (refer to PTL 1). According to this method, it is possible to strongly bond the friction material to the pressure plate without using a primer.

Also, according to the above method, the adhesive having a particle form, so-called powdery adhesive is used, so that a solvent is not required. Thereby, it is possible to prevent the environmental contamination and to reduce the time consumed to dry the adhesive. Since the above adhesion method of using the powdery adhesive provides a strong adhesive force, it is very appropriately applied to a brake pad for a vehicle.

In the meantime, when attaching the disc brake pad, not only the strong adhesive force but also bonding durability is required. In particularly, a brake pad for a vehicle has a problem in that rust occurs on the pressure plate of the brake pad and the adhesive force is thus lowered. Regarding this problem, a method has been used in which a chemical coating film is formed on a surface by using phosphate and the like and a primer layer (organic coating film) is formed thereon (refer to PTLs 2 and 3). The iron phosphate and organic coating films formed on the metal surface protect the metal surface.

### Citation List

### Patent Literatures

[PTL 1] JP-A-2000-88021
[PTL 2] JP-A-11-13802
[PTL 3] JP-A-2003-148528

### Summary of Invention

### Technical Problem

The powdery adhesive disclosed in PTL 1 provides a method of strongly and efficiently attaching the pressure plate and the friction material without using a primer and has the anti-rust ability equivalent to that of a case where the primer is used. However, when the brake pad is used in harsh environments, for example in a coast region or a region of a snowing zone in which a snow removing agent is sprayed, the rust due to water, salt and the like may occur at a boundary between the pressure plate and the friction material. When the brake pad is frequently used in the region, the rust grows and may penetrate even an adhesion surface of the pressure plate with the friction material. In this state, when a load condition to a brake due to an excessive loading or high load condition such as repeated rapid braking from a high speed traveling is further applied, the pressure plate is deteriorated, so that the adhesion with the friction material may be affected.
An object of the invention is to further improve bonding reliability of a product in which a metal plate and a porous material are attached together in a history of harsh environments and high load conditions.

### Solution to Problem

As the measures against the rust occurrence, an additive may be mixed with an adhesive, in addition to a method of treating a surface of the pressure plate. However, since such measure lowers the adhesive force, it is excluded as much as possible.
The inventors made an earnest examination so as to solve the above problems. As a result, the inventors find that when an anti-rust filler is contained in an appropriate amount, it is possible to improve the anti-rust ability without lowering the adhesive force, so that the adhesive force can be kept even in harsh environments and high load conditions, and finally completed the invention.
That is, the invention has following configurations.

There is provided a powdery adhesive that is used for adhesion between a metal plate and a porous material, the powdery adhesive comprising at least:
thermosetting adhesive particles; and
an anti-rust filler,
wherein a content of the anti-rust filler is 0.1 to 1.0 part by mass with respect to 100 parts by mass of the thermosetting adhesive particles.

Also, it is preferable that the anti-rust filler is at least one of phosphate and molybdate.

Also, another aspect of the invention provides a method for adhesion between a metal plate and a porous material, the method comprising:
electrostatically applying the powdery adhesive to a metal plate and pre-curing the same; and
compression-bonding and heating a porous material on the pre-cured powdery adhesive.

Also, another aspect of the invention provides a method of manufacturing an adhered material of a metal plate and a porous material, the method comprising:
electrostatically applying the powdery adhesive to a metal plate and pre-curing the same; and
compression-bonding and heating a porous material on the pre-cured powdery adhesive.

### Advantageous Effects of Invention

By the powdery adhesive of the invention, it is possible to strongly and efficiently attach the metal plate and the porous material, to suppress the rust from occurring on an adhesion surface and to further improve the bonding reliability even in the harsh environments and the high load conditions.

### Description of Embodiments

In the specification, the "part by mass" and the "part by weight" have the same meaning.
A powdery adhesive of the invention is a powdery adhesive in which an anti-rust filler is mixed with thermosetting adhesive particles,
As the thermosetting adhesive, a thermoplastic-resin-modified thermosetting adhesive or an elastomer-modified thermosetting adhesive may be exemplified.

The thermoplastic-resin-modified thermosetting adhesive may include a polyvinyl butyral/phenolic, polyvinyl formal/phenolic, nylon/phenolic, polyvinyl acetate/phenolic, polyamide/epoxy, acryl/epoxy, polyester/epoxy and the like, for example.

Also, the elastomer-modified thermosetting adhesive may include NBR/phenolic, chloroprene/phenolic, silicon/phenolic, polyurethane/phenolic, NBR/epoxy, polyurethane/epoxy and the like, for example. Also, as the phenolic resin, novolac containing resol or hexamethylenetetramine may be used.

The powdery adhesive of the invention is applied to a material to be adhered by an electrostatic application method. As the electrostatic application method, a corona charging method or tribo charging method may be used. The thermosetting adhesive particles that are used in the invention may be available in the market. It is sufficient that a volume mean diameter thereof is within a range within which the thermosetting adhesive particles are typically used as the powdery adhesive. For example, the thermosetting adhesive particles having a volume mean diameter of 15 to 45 µm may be preferably used.

It is assumed that the anti-rust filler that is mixed in the powdery adhesive of the invention forms a passive coating film on an adhesion surface of a metal, thereby suppressing an adhesive force from being lowered.

When bonding a metal plate and a porous material, particularly, a pressure plate of a brake pad and a friction material, a strong adhesive force is required. Since the brake pad is used to brake a vehicle body of a vehicle having a weight of several tons, a large shear force is caused on the adhesion surface between the pressure plate and the friction material. Thus, a level of the adhesive force needed in the powdery adhesive that is used for the corresponding utility is very high. Therefore, an additive that may deteriorate the adhesive force has not been actively mixed.

The anti-rust filler that is used in the invention may include phosphate such as zinc phosphate, calcium phosphate, magnesium phosphate, aluminum phosphate, zinc hypophosphate, calcium hypophosphate, magnesium hypophosphate, aluminum hypophosphate, zinc polyphosphate, calcium polyphosphate, magnesium polyphosphate, aluminum polyphosphate and the like, molybdate such as molybdenum trioxide, sodium molybdate, ammonium molybdate and the like, and the like. In particular, aluminum tripolyphosphate is effective and is thus preferable as phosphate. The anti-rust filler may be used individually or in combination with two or more species thereof.

A content of the anti-rust filler is 0.1 to 1.0 part by mass with respect to 100 parts by mass of the thermosetting adhesive particles. In this range, it is possible to obtain the sufficient anti-rust effect and the favorable adhesive force.

Also, as the anti-rust filler, it is possible to use an anti-rust filler that is generally used. An upper limit value of a volume mean diameter of the anti-rust filler particles is typically 10 µm or less, preferably 5 µm or less and more preferably 3 µm. Also, a lower limit value thereof is 0.1 µm or larger. The corresponding range is preferable so as to secure the favorable adhesive force as the adhesive.

Furthermore, an aspect ratio of the anti-rust filler particle is 100 or less, preferably 10 or less and more preferably, 5 or less. When the aspect ratio is large, an occupied volume (territory volume) of one filler particle in the adhesive layer is increased, so that the fluidity of the adhesive is decreased in a bonding process (thermoforming) and the penetration to the friction material is degraded. Hence, the above range is preferable.

The method of manufacturing the powdery adhesive of the invention is not particularly limited and the powdery adhesive can be manufactured using a method of manufacturing a typical powdery adhesive. For example, the powdery adhesive can be manufactured by melt-kneading a thermoplastic-resin-modified thermosetting adhesive and an anti-rust filler, and a curing agent as required. Also, the powdery adhesive of the invention can be manufactured using a dry blend method.

The curing agent that is an arbitrary additive agent may include tertiary amines such as tri ethanol amine, dimethyl-p-toluidine and the like and basic vulcanizing agents such as hexamethylenetetramine, n-butyl aldehyde-aniline condensate and the like. Also, when the curing agent is added, a content thereof is not particularly limited insomuch as it does not deteriorate the effects of the invention.

When the powdery adhesive of the invention is manufactured using the melt kneading, a general kneader such as an open roll, a single screw extruder, a twin screw extruder, a multi screw extruder, specifically Banbury mixer or ko-kneader and the like may be used. The time and temperature of the melt kneading can be appropriately set by one skilled in the art, depending on types of the thermosetting adhesive that is used in the invention.

On the other hand, when the powdery adhesive of the invention is manufactured using the dry blend, a general blender such as a Henschel mixer, a super mixer, a high speed mixer and the like may be used. The time and temperature of the dry blend can be appropriately set by one skilled in the art, depending on types of the thermosetting adhesive that is used in the invention.

The porous material that adheres to the metal plate may include a friction material, for example. In this case, as the porous material, a molded material may be used. Alternatively, a metal plate to be adhered is set in a mold and a raw material of the friction material is introduced, pressurized and heated in the mold and then molded on the metal plate.

The powdery adhesive of the invention may be applied to a method disclosed in JP-A-2000-88021. For instance, a method of electrostatically applying and pre-curing a powdery adhesive on a metal plate such as pressure plate and compression-bonding and heating a porous material on the pre-cured powdery adhesive may be exemplified.

### [Embodiments]

In the below, the invention is more specifically described with reference to embodiments. However, it should be noted that the invention is not limited to the embodiments.

### <Embodiment 1>

100 parts by mass of the straight phenolic resin (novolac) as the base resin, 10 parts by mass of the hexamethylenetetramine as the curing agent and 0.1 part by mass of the aluminum tripolyphosphate (volume mean diameter: 3 µm, aspect ratio: 5)as the anti-rust filler were introduced and melt-kneaded at 120°C in a ko-kneader, so that a complex body was obtained. The obtained complex body was cooled and pulverized, so that an adhesive 1 having a volume mean diameter of 35 µm was obtained.

### <Embodiments 2 and 3>

Adhesives 2 and 3 were obtained in the same manner as the embodiment 1, except that an addition amount of the anti-rust filler was changed to 0.5 part by mass and 1.0 part by mass, respectively.

### <Comparative Example>

An adhesive 4 was obtained in the same manner as the embodiment 1, except that the anti-rust filler was not added.

### <Manufacturing of Friction Material>

The adhesives of the embodiments 1 to 3 and the comparative example were electrostatically applied to pressure plates, which were then pre-cured (pre-curing conditions: 125°C×25 minutes). Thicknesses of the adhesive layers were 40 µm. The pressure plates to which the adhesives were attached and a pre-molded product of a friction material, which was obtained by mixing and pre-molding raw materials shown in Table 1, were pressurized, thermoformed and then heated, so that a friction material (brake pad) was manufactured.

### <Shear Test>

A shear test was performed for the manufactured friction material. The shear test was performed on the basis of JIS D4422 and a shear strength and a matrix fracture area were measured at room temperature and 300°C. Results are shown in Table 2.

### <Rust Occurrence Test on Adhesion Surface>

A rust occurrence test on an adhesion surface was performed for the above friction material. The rust test on an adhesion surface was performed based on the brine spraying test of JIS D4419 and a rust occurring area was evaluated after 9 cycles. Results are shown in Table 3.

**[Table 1]**

| Table 1: Mixing ratio of raw materials of friction material | |
|---|---|
| material names of raw materials | mixing ratio (parts by mass) |
| phenolic resin | 15 |
| aramid pulp | 10 |
| inorganic fiber | 15 |
| zirconium silicate | 3 |
| organic dust | 7 |
| barium sulfate | 45 |
| graphite | 5 |

**[Table 2]**

| Table 2: Results of shear test | | | | | |
|---|---|---|---|---|---|
| | | Embodiment 1 | Embodiment 2 | Embodiment 3 | Comparative example 1 |
| R.T. test | shear strength (MPa) | 9.3 | 9.0 | 9.1 | 9.3 |
| | matrix fracture area (%) | 100 | 100 | 98 | 100 |
| 300°C test | shear strength (MPa) | 5.4 | 5.0 | 4.9 | 5.3 |
| | matrix fracture area (%) | 100 | 99 | 97 | 98 |

**[Table 3]: Results of Rust Occurrence Test on Adhesion Surface**

| | Embodiment 1 | Embodiment 2 | Embodiment 3 | Comparative example |
|---|---|---|---|---|
| Rust occurring area (%) | 2 | 1 | 2 | 10 |

In Table 2, the shear strengths and the matrix fracture areas of the friction materials of the embodiments and comparative example were substantially equivalent. It is clear that when the anti-rust filler is added in an amount of 1.0 part by mass or less, it does not have a bad influence on the adhesive force of the adhesive.
Meanwhile, in Table 3, it is clear that the rust less occurs on the friction materials having the anti-ruse filler added thereto in the rust occurrence test on the adhesion surface by the brine spraying test, compared to the comparative example in which the anti-rust filler is not added.

Although the invention has been specifically described with reference to the specific illustrative embodiments, it is apparent to one skilled in the art that a variety of changes and modifications can be made without departing from the spirit and scope of the invention. This application is based on Japanese Patent Application No. 2010-218019 filed on September 29, 2010, the disclosures of which are incorporated herein by way of reference.

### Industrial Applicability

The powdery adhesive of the invention can be used as the adhesive for the adhesion between the metal and the porous material, for example between the pressure plate of the brake pad and the friction material. Also, the powdery adhesive can be used as an adhesive of a shoe and a lining of a drum brake.

## Claims

1. A powdery adhesive that is used for adhesion between a metal plate and a porous material, the powdery adhesive comprising at least:
thermosetting adhesive particles; and
an anti-rust filler,
wherein a content of the anti-rust filler is 0.1 to 1.0 part by mass with respect to 100 parts by mass of the thermosetting adhesive particles.

2. The powdery adhesive according to claim 1, wherein the anti-rust filler is at least one of phosphate and molybdate.

3. A method for adhesion between a metal plate and a porous material, the method comprising:
electrostatically applying the powdery adhesive according to claim 1 or 2 to a metal plate and pre-curing the same; and
compression-bonding and heating a porous material on the pre-cured powdery adhesive.

4. A method of manufacturing an adhered material of a metal plate and a porous material, the method comprising:
electrostatically applying the powdery adhesive according to claim 1 or 2 to a metal plate and pre-curing the same; and
compression-bonding and heating a porous material on the pre-cured powdery adhesive.
